# DEMANDE DE BREVET EUROPEEN

(11) **EP 1 671 730 A1**
(43) Date de publication de la demande: **21.06.2006**
(21) Numéro de dépôt: 05027943.9
(22) Date de dépôt: 20.12.2005
(51) Int. Cl.: B23D 37/10

(54) **Dispositif de brochage**

(30) Priorité: 20.12.2004 FR 0413621
(71) Demandeur: Crea Concept Industrie, 41000 Blois (FR)
(72) Inventeur: Mignon, Philippe, 41000 Blois (FR)
(74) Mandataire: Thibon, Norbert

(57) **Abrégé**

L'invention concerne un dispositif de brochage par entraînement d'une broche (1) à travers une pièce à usiner montée sur un plateau support (3), qui comporte un premier coulisseau (10) agissant par une tête de traction (11) sur une extrémité inférieure (6) de la broche (1) et un second coulisseau (12) agissant par une tête de relevage (13) sur une extrémité supérieure opposée (7) de la broche (1). Les coulisseaux (10, 12) sont reliés entre eux et guidés dans leurs déplacements par rapport au plateau (3) exclusivement par des deux colonnes (15) montées mobiles en translation suivant leur axe à travers le plateau (3), formant une structure rigide avec le premier coulisseau (10) et le long desquelles le second coulisseau (12) est monté mobile.

## Description

La présente invention concerne la conception et la réalisation d'un dispositif de brochage par entraînement d'une broche à travers une pièce à usiner montée sur un plateau support.

Dans toute la présente description, l'invention sera décrite dans le cadre d'une application préférée qui concerne le brochage de l'intérieur d'une pièce, par une broche entraînée dans un orifice déjà formé dans cette pièce, aussi appelé avant-trou, et dont les parois doivent être usinées. Cependant, l'invention s'applique également tout aussi bien au brochage de l'extérieur d'une pièce, par entraînement d'une broche autour de la pièce dont la surface externe est à usiner, et cela par une simple adaptation à la portée de l'homme du métier du dispositif qui sera décrit ci-après.

De même, l'invention sera plus spécifiquement décrite pour le cas d'un dispositif de brochage vertical, c'est-à-dire avec entraînement de la broche dans un mouvement de translation de haut en bas. Elle s'applique également de la même manière au brochage horizontal, pour lequel le dispositif est prévu pour entraîner la broche dans un mouvement de translation sensiblement parallèle au sol.

On connaît de façon classique des machines verticales à brocher les intérieurs des pièces par des broches entraînées par traction. Une telle machine est notamment décrite dans le document EP 0 594 103. Elle se compose d'un bâti fixe, supportant un plateau d'appui d'une pièce à usiner, et de deux colonnes fixes de guidage de deux coulisseaux qui coulissent le long d'elles : un coulisseau inférieur associé à une tête de traction agissant sur une extrémité inférieure de la broche, et un coulisseau supérieur associé à une tête de poussée agissant sur une extrémité supérieure de la broche. Les deux colonnes de guidage sont fixes dans le bâti. Le mouvement de chacun des deux coulisseaux le long d'elles est commandé par un système de vérins propre. Les coulisseaux sont en outre reliés l'un à l'autre par deux colonnes mobiles en translation par rapport au plateau d'appui de la pièce à usiner, qui ont pour rôle de permettre le réglage de l'écartement entre les deux coulisseaux.

Une telle machine présente divers inconvénients. Elle forme notamment un ensemble complexe à fabriquer et à entretenir en état de bon fonctionnement. De plus, la qualité d'usinage des pièces brochées n'est pas toujours satisfaisante : en effet, l'ensemble a tendance à bouger sous l'effet de la résistance exercée par la pièce sur la broche qui l'usine, ce qui rend le brochage imprécis.

L'invention vise à remédier aux inconvénients des machines de brochage existantes, et notamment à ceux énumérés ci-avant, en proposant un dispositif de brochage, par entraînement d'une broche à travers une pièce à usiner montée sur un plateau support, qui est simple dans sa réalisation mécanique, et qui permet d'obtenir une qualité de brochage de la pièce optimale.

A cet effet, l'invention propose un dispositif de brochage qui comporte un premier coulisseau agissant par une tête de traction sur une extrémité inférieure de la broche et un second coulisseau agissant par une tête de relevage sur une extrémité supérieure opposée de la broche. Les coulisseaux sont reliés entre eux et guidés dans leurs déplacements par rapport au plateau exclusivement par des deux colonnes montées mobiles en translation suivant leur axe à travers le plateau, formant une structure rigide avec le premier coulisseau et le long desquelles le second coulisseau est monté mobile.

Suivant l'invention, le premier coulisseau assurant la traction de la broche à travers la pièce, qui est en général le coulisseau inférieur dans le cas préféré d'une machine de brochage verticale, est fixe sur les colonnes. Ces éléments sont par conséquent solidaires dans leurs déplacements. Ainsi, lors du brochage, c'est l'ensemble rigide " colonnes - coulisseau inférieur " qui entraîne la broche au travers de la pièce à usiner. Il en résulte avantageusement une grande stabilité de cet ensemble en mouvement, et ce malgré la résistance présentée par la pièce aux efforts qui sont exercés sur elle par la broche qui enlève une partie de sa matière.

Le second coulisseau, qui est associé à une tête dite de relevage, mais qui peut également avoir une fonction de poussée sur la broche, est quant à lui mobile sur les colonnes, ce qui permet de régler son écartement avec le premier coulisseau.

La structure de ce dispositif est avantageusement simple, puisque ce sont les deux seules et mêmes colonnes qui servent à la fois à relier les coulisseaux entre eux, à régler leur écartement, et à les guider dans leurs déplacements par rapport au plateau support. Le nombre de pièces nécessaires à la fabrication du dispositif est de ce fait réduit, et on évite en particulier la présence de nombreuses bagues de guidage des coulisseaux particulièrement difficiles à changer, à la différence de ce qui est prévu dans les dispositifs de l'art antérieur. Ainsi, tant la fabrication que les opérations d'entretien du dispositif sont considérablement simplifiées.

La broche utilisée selon l'invention est classique en elle-même. Elle comporte typiquement deux extrémités pour son accrochage, respectivement, à une tête de traction associée au premier coulisseau, dit de traction, et à une tête de relevage associée au second coulisseau, dit de relevage, une partie passive assurant son centrage dans la pièce, et une partie active taillée formant des dents à progression multiple. Dans sa partie active, assurant l'usinage, cet outil peut présenter tout type de profil en section, notamment rond, polygonal, cannelé, etc, comme il est classique dans les dispositifs de brochage connus.

La broche est destinée à être insérée, par son extrémité avant, à l'intérieur d'un trou préexistant dans la pièce, également nommé avant-trou, et à être tirée en translation à travers lui, selon son axe, de manière à usiner progressivement les parois de cet avant-trou, au fur et à mesure de sa progression, notamment au fur et à mesure de la progression de sa partie dentée dans la pièce, c'est-à-dire à creuser sa surface pour modifier sa forme et ses dimensions.

Suivant une caractéristique avantageuse de l'invention, les colonnes sont guidées dans leur mouvement par rapport au plateau chacune par un fût solidaire du plateau, si bien que les efforts d'usinage sont entièrement supportés au niveau du plateau. Il en résulte une plus grande stabilité de l'ensemble lors du brochage, ce qui a pour conséquence d'augmenter la précision de ce dernier.

Chacun de ces fûts présente de préférence une hauteur suffisante pour assurer un guidage approprié du mouvement des colonnes suivant leur axe sans qu'elles risquent de se déformer lors de l'entraînement de la broche à travers la pièce à usiner. Cette caractéristique permet d'obtenir une meilleure solidité de l'ensemble, ainsi qu'une meilleure précision du brochage, puisque le mouvement des colonnes et du coulisseau de traction, qui détermine le mouvement de translation de la broche, est de ce fait précis et stable.

En outre, dans des modes de réalisation préférés de l'invention, les dimensions des fûts de part et d'autre du plateau sont telles d'une part que le premier coulisseau peut venir suffisamment près du plateau pour permettre l'accrochage de la broche à la tête de traction sensiblement au niveau du plateau ; et d'autre part, que le second coulisseau peut venir suffisamment près du plateau pour permettre l'usinage complet de la pièce par la broche.

En particulier, on prévoit avantageusement que les fûts ne soient pas trop hauts au-dessus du plateau, ceci pour s'assurer que le coulisseau supérieur ne vienne jamais buter contre eux dans sa course vers le bas alors que la broche n'aurait pas encore entièrement traversé la pièce à usiner.

Suivant des modes de réalisation préférés dans la pratique industrielle, l'invention répond en outre aux caractéristiques suivantes, mises en oeuvre séparément ou en chacune de leurs combinaisons techniquement opérantes.

Certaines de ces caractéristiques permettent notamment de résoudre un des objectifs de l'invention, qui est de proposer un dispositif de brochage à la fois solide et offrant une grande précision de brochage.

Ainsi, selon une caractéristique avantageuse de l'invention, les colonnes sont reliées entre elles, à leurs extrémités du côté du plateau opposé au premier coulisseau, par une plaque de liaison rigide disposée au-dessus du second coulisseau, si bien que l'ensemble "colonnes - coulisseau de traction - plaque de liaison " forme une structure rigide qui offre une résistance maximale aux efforts exercés sur lui, et plus particulièrement aux efforts exercés sur la broche par la pièce usinée, qui lui sont transmis quasiment intégralement.

Dans des modes de réalisation préférés de l'invention, le coulisseau de traction relie les colonnes l'une à l'autre à une de leurs extrémités, et la plaque de liaison les relie à leurs extrémités opposées, si bien que l'ensemble forme un cadre rigide d'une grande solidité et stabilité. Le plateau support de la pièce à usiner se trouve entre le coulisseau de traction et la pièce à usiner.

Dans des modes de réalisation préférés de l'invention, le mouvement simultané du coulisseau de traction et des colonnes est commandé par un système de vérins. Il s'agit de préférence de vérins hydrauliques, qui poussent le coulisseau de traction dans un mouvement de translation l'éloignant du plateau support de la pièce, et qui permettent d'obtenir une force de traction par ce dernier suffisamment forte pour entraîner la tête de traction, et donc la broche qui lui est reliée, dans un déplacement à travers la pièce au cours duquel elle enlève de la matière, malgré la résistance exercée par la pièce sur la broche.

Les vérins prennent avantageusement appui d'une part sur le premier coulisseau, ou coulisseau de traction, et d'autre part au niveau du plateau support de la pièce, sur un bâti portant ce dernier. Les efforts nécessaires pour réaliser l'usinage sont de ce fait entièrement exercés au niveau du plateau, de part et d'autre de celui-ci, ce qui confère une plus grande efficacité et une plus grande précision au brochage.

L'efficacité de traction est également favorisée lorsque, conformément à des modes de réalisation préférés de l'invention, l'axe des vérins est parallèle à l'axe de la broche.

De plus, l'invention prévoit avantageusement que le système de vérins comporte deux vérins disposés symétriquement de part et d'autre des colonnes. Les efforts pour réaliser l'usinage sont de ce fait avantageusement tous exercés au niveau du plateau, répartis autour des colonnes. En liaison avec la présence des fûts de guidage des colonnes au niveau du plateau, on obtient une stabilité encore renforcée de l'ensemble rigide " colonnes - coulisseau ", qui est poussé simultanément par les vérins entourant les colonnes, lors de son mouvement par rapport au plateau durant le brochage. Il en résulte une diminution du risque de déformation des colonnes lors de l'opération d'usinage, et une plus grande précision du brochage.

Suivant une caractéristique avantageuse de l'invention, le second coulisseau, ou coulisseau de relevage, est monté mobile le long des colonnes. Ceci permet une mise en place facile de la broche préalablement à l'opération d'usinage. Lorsque cette dernière est achevée, la broche est aisément détachée de la tête de relevage associée au coulisseau de relevage, et l'ensemble " coulisseau - tête de relevage " est déplacé le long des colonnes, de manière à permettre le dégagement de la pièce qui a été usinée. La broche est alors à nouveau fixée en position initiale, en prévision d'une nouvelle opération d'usinage.

Dans des modes de réalisation préférés de l'invention, le mouvement du second coulisseau, à savoir le coulisseau de relevage, le long des colonnes est commandé par un système de vérin comportant un vérin central en ligne avec l'axe de la broche. Ce vérin est pneumatique ou hydraulique.

Dans des modes de réalisation préférés de l'invention, le système de vérin commandant le mouvement du premier coulisseau est plus puissant, et le système de vérin commandant le mouvement du second coulisseau est moins puissant. De plus, le dispositif suivant l'invention est associé à des moyens de commande synchronisée des deux systèmes de vérins et de la saisie et de la libération de la broche par la tête de traction et par la tête de relevage.

Suivant une caractéristique avantageuse de l'invention, le dispositif comporte des moyens de réglage de l'espacement entre le premier coulisseau et le second coulisseau en fonction de la hauteur de la broche. Cet espacement est avantageusement réglé dans une étape initiale, avant des opérations de brochage en série de pièces identiques au moyen de la même broche.

Ces moyens de réglage sont de préférence constitués par une traverse rigide se fixant en une position longitudinale variable sur les colonnes, et sur laquelle prend appui le vérin commandant le mouvement du second coulisseau.

Dans une telle configuration, la traverse rigide forme avec les colonnes et le coulisseau de traction un cadre rigide, qui offre une bonne résistance aux efforts exercés par la pièce sur la broche lors de l'usinage.

L'invention sera maintenant plus complètement décrite dans le cadre de caractéristiques préférées et de leurs avantages, en faisant référence aux figures 1 à 5 dans lesquelles :
- la figure 1 représente une vue d'un dispositif vertical pour le brochage des intérieurs de pièces selon l'invention, avec des coupes partielles de certains de ses éléments ;
- et les figures 2 à 5 montrent un enchaînement de séquences consécutives d'une opération de brochage au moyen du dispositif de la figure 1.

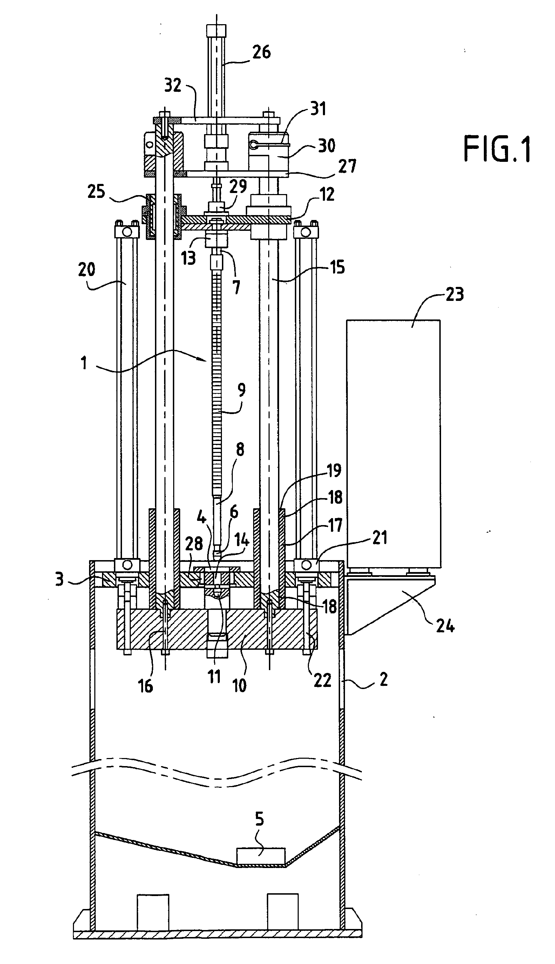

Sur la figure 1 est représenté un dispositif de brochage vertical, pour le brochage des intérieurs de pièces. Ce dispositif est représenté dans sa position normale d'utilisation, dans laquelle un outil, ou broche 1, suit un parcours du haut vers le bas à travers une pièce à usiner.

Dans toute la suite de la description, les éléments constitutifs de ce dispositif seront définis par rapport à cette configuration préférée de l'invention. Il sera à la portée de l'homme du métier d'adapter ce dispositif pour le brochage horizontal, en remplaçant pour les éléments le repère vertical par un repère horizontal.

De même, il est fait référence dans la description au parcours de la broche au travers d'une pièce à usiner. L'invention englobe cependant également le cas où la broche travaille l'extérieur de la pièce à usiner, en passant tout autour d'elle. Dans ce cas, l'homme du métier saura aisément adapter le dispositif suivant l'invention pour la fixation et l'utilisation d'une broche non pas en forme de tige, mais de cylindre creux ou autre forme adaptée au brochage des extérieurs de pièces.

Le dispositif selon l'invention comporte un bâti fixe 2 reposant sur le sol. Fixé sur ce bâti, parallèlement au sol, se trouve un plateau rigide 3 servant de support à la pièce à usiner. Sur le plateau 3 est aménagé un réceptacle 4 de la pièce à usiner, dont la paroi de fond est percée d'un orifice 14 de diamètre supérieur au diamètre de la broche 1, afin de permettre le passage de la broche à son travers. La pièce à usiner n'est pas représentée sur la figure, ni sur aucune des suivantes, pour des raisons de clarté. Pour son usinage, elle est posée dressée sur le réceptacle 4, le chemin à usiner se disposant perpendiculairement au plateau 3. La pièce à usiner possède de façon classique un avant-trou, c'est-à-dire un orifice déjà percé, et dont les parois sont à modifier, à travers lequel sera insérée la broche pour son usinage.

Dans le fond du bâti 2 se trouve un bac d'évacuation de l'huile de coupe 5.

L'outil 1 est une broche en forme de tige présentant une extrémité inférieure 6, qu'on peut également qualifier d'extrémité avant, car c'est elle qui pénétrera en premier dans la pièce à usiner, et une extrémité supérieure, ou extrémité arrière, 7. Près de l'extrémité avant 6, une première portion de broche 8 présente un diamètre sensiblement égal, mais légèrement inférieur, au diamètre de l'avant-trou de la pièce à usiner. Cette portion 8 assure le centrage de la broche 1 dans l'avant-trou.

La partie centrale 9 de la broche présente une surface munie de dents à progression multiple, dont l'extension radiale augmente de l'avant de la broche vers l'arrière. Lors de la progression de la broche à travers la pièce, ce sont ces dents qui réalisent l'enlèvement spécifique de matière de la pièce nécessaire à la mise en forme de l'avant-trou en un orifice usiné.

Le dispositif comporte en outre deux coulisseaux situés de part et d'autre du plateau 3 de support de la pièce à usiner et commandant le mouvement de translation de la broche 1.

Un premier coulisseau 10, ou coulisseau inférieur de traction, disposé au-dessous le plateau 3, est solidaire d'une tête de traction 11 agissant sur l'extrémité avant 6 de la broche 1.

Un second coulisseau 12, ou coulisseau supérieur de relevage, disposé au-dessus du plateau 3, est quant à lui solidaire d'une tête de relevage 13 coopérant avec l'extrémité arrière 7 de la broche 1.

Les têtes de traction 11 et de relevage 13 sont disposées en ligne avec l'axe de la broche, et elles sont constituées de façon classique, de manière telle que les extrémités respectives de la broche 1 puissent y être fixées, détachable, notamment par un système de mandrin classique en soi.

La tête de relevage 13 est disposée au-dessus du plateau 3. Elle n'a jamais à le traverser. La tête de traction 11 est quant à elle située au-dessous du plateau 3. Dans sa position la plus haute, elle peut s'engager dans une cavité 28 ménagée dans le plateau 3, qui atteint l'orifice 14 situé dans le fond du réceptacle 4 de la pièce à usiner.

Les coulisseaux inférieur 10 et supérieur 12 sont reliés entre eux par l'intermédiaire de deux colonnes 15 d'axe parallèle à l'axe de l'orifice à usiner de la pièce.

Le coulisseau inférieur 10 est fixé sur les colonnes 15, notamment au moyen de vis 16, de façon à former avec elles une structure rigide et à en être solidaire dans ses déplacements. Il est de préférence fixé à l'extrémité inférieure des colonnes, sous le plateau 3.

Les colonnes 15 sont quant à elles montées mobiles, en translation suivant leur axe, par rapport au plateau 3. Chacune est guidée dans ses mouvements par un fût 17 solidaire du plateau 3, à travers lequel elle est montée à coulissement. Les fûts 17 sont disposés de manière à traverser le plateau 3, suivant le même axe que les colonnes 15. Ils présentent une hauteur suffisante pour bien guider les colonnes au niveau et autour du plateau. Ceci permet avantageusement d'éviter qu'elles ne se déforment lors de leurs mouvements, lorsque la broche 1 traverse la pièce à usiner en en enlevant de la matière, et que cette dernière résiste aux efforts exercés sur elle par la broche, cette résistance étant transmise, par l'intermédiaire du coulisseau inférieur 10, aux colonnes 15.

Les fûts 17 présentent en outre une hauteur au-dessus du plateau 3 qui est suffisamment faible, en liaison avec les dimensions de la broche, pour que lorsque le coulisseau supérieur 12 arrive en butée contre leur face supérieure, dans le mouvement de descente de la broche, la partie dentée 9 de cette dernière ait entièrement traversé la pièce, si bien que l'usinage est terminé.

De plus, les fûts 17 présentent également une hauteur au-dessous du plateau 3 qui est suffisamment faible pour que la tête de traction 11 puisse venir se loger dans la cavité 28 prévue à cet effet dans le plateau 3 avant que, ou avantageusement en même temps que, le coulisseau inférieur 10 vienne en butée contre la face inférieure des fûts 17.

Le montage coulissant des colonnes 15 dans les fûts 17 fait avantageusement intervenir, dans le mode de réalisation préféré du dispositif suivant l'invention décrit ici, deux bagues de guidage en 18 qui tapissent l'intérieur de chaque fût 17 dans ses parties respectivement inférieure et supérieure, et qui sont réalisées en une matière appropriée pour favoriser un glissement sans frottement des surfaces en contact. De plus, chaque fût est muni dans sa partie supérieure, en 19, d'un coussinet d'amortissement des chocs exercés sur lui par le coulisseau supérieur 12 entrant en son contact dans le mouvement de descente de la broche. Ces coussinets présentent également avantageusement une fonction de barrière d'étanchéité aux poussières qui pourraient tombe sur les fûts 17.

Le coulisseau inférieur 10 est associé à un système de vérins commandant son mouvement en translation. Dans des modes de réalisation préférés de l'invention, il s'agit de deux vérins 20, qui sont notamment des vérins hydrauliques permettant d'obtenir une puissance appropriée pour forcer le déplacement du coulisseau inférieur 10.

Les vérins 20 sont disposés sur les bords latéraux du dispositif, de façon à encadrer les deux colonnes 15. Leur action s'exerce en appui d'une part sur le plateau 3, sur lequel leurs cylindres sont fixés en 21, d'autre part sur le coulisseau inférieur 10, auquel les extrémités libres de vérins sont fixées en 22, de manière à entraîner le coulisseau avec les colonnes 15 dans un mouvement de translation dans la direction verticale.

Les vérins 20 sont commandés à partir d'une armoire de pilotage 23 disposée sur une plaque support 24 fixée sur une face latérale du bâti 2.

Le coulisseau supérieur ou coulisseau de relevage 12 est monté mobile verticalement, en coulissement libre le long des colonnes 15 qui guident ses déplacements par rapport au plateau 3. Ce montage est notamment réalisé au moyen de douilles de guidage 25, solidaires du coulisseau. Le coulisseau supérieur 12 est mobile le long d'une partie supérieure des colonnes 15 au-dessus du plateau 3.

Le déplacement du coulisseau supérieur 12 en translation verticale le long des colonnes 15 est commandé par un système de vérins, notamment, dans des modes de réalisation préférés de l'invention, par un vérin central 26 en ligne avec l'axe de la broche 1. Ce vérin est pneumatique ou hydraulique. Il prend appui d'une part sur une traverse rigide 27 reliant entre elles les deux colonnes 15 dans la partie de ces dernières située au-dessus du coulisseau supérieur 12, et d'autre part sur le coulisseau supérieur 12, auquel son piston est fixé par un système d'attelage 29.

L'alimentation du vérin 26 est commandée depuis une armoire de pilotage 23 qui est avantageusement la même que celle commandant l'alimentation des vérins 20 dirigeant le mouvement du coulisseau inférieur 10. Depuis cette armoire sont également commandées, de façon synchronisée avec le mouvement des vérins, la saisie et la libération des extrémités 6 et 7 de la broche 1 par les têtes de traction 11 et de relevage 13.

La traverse 27 relie les deux colonnes 15 l'une à l'autre dans leur partie supérieure. Sa position sur ces colonnes est variable, et elle peut être fixée au moyen de deux bagues 30 dont elle est solidaire qui enserrent chacune une des colonnes 15. Un système de serrage par une bride 31 encerclant chaque bague 30 permet de serrer cette dernière autour de sa colonne respective, et d'immobiliser la traverse 27 dans cette position. Ce système permet de régler en hauteur la position de la traverse le long des colonnes, et donc la position d'appui fixe du vérin 26. On peut de ce fait régler de façon simple la position initiale du coulisseau supérieur 12 le long des colonnes, et plus particulièrement son écartement du coulisseau inférieur 10, en fonction de la longueur de la broche 1 utilisée. Il reste ensuite immobilisé dans cette position pendant toute l'opération d'usinage.

Les colonnes 15 sont également reliées entre elles, du côté opposé au coulisseau inférieur 10 par rapport au plateau 3, par une plaque de liaison rigide 32. Cette dernière est de préférence fixée à l'extrémité supérieure des colonnes, au-dessus de la traverse 27. Cette plaque 32 permet notamment le maintien de l'espacement entre les deux colonnes 15 à leurs extrémités supérieures.

Le brochage d'une pièce au moyen du dispositif selon l'invention procède comme suit.

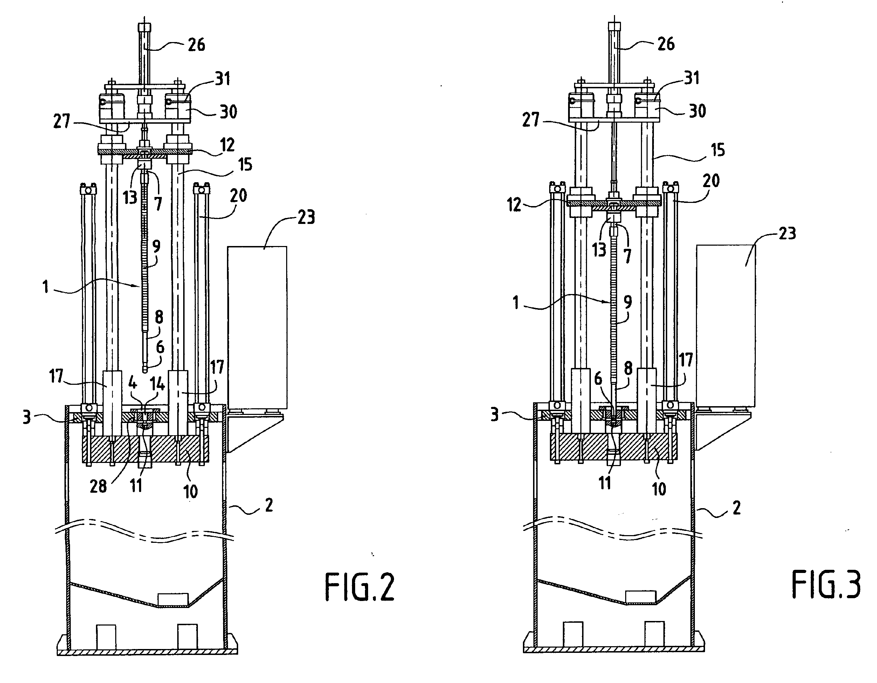

La première étape du brochage est illustrée sur la figure 2.

Les colonnes 15 se trouvent initialement en position haute, celle-ci étant limitée par le fait que le coulisseau inférieur 10 est en butée contre les fûts de guidage des colonnes 17, et que la tête de traction 11 qui lui est associée est engagée dans la cavité 28 du plateau 3, prête à saisir l'extrémité inférieure 6 de la broche à travers l'orifice 14 du réceptacle recevant la pièce à usiner. Le coulisseau supérieur 12 est également en position haute sur les colonnes 15, c'est-à-dire remonté pratiquement contre la traverse supérieure 27. Cette dernière est fixée par serrage des brides 31 autour des bagues 30 encerclant les colonnes dans une position qui lui est assignée en préréglage de la position du coulisseau supérieur 12 au départ de l'opération d'usinage. La broche 1 est fixée par son extrémité arrière 7 à la tête de relevage 13 qui est associée au coulisseau de relevage 12.

Dans cette position, l'espace situé au-dessus du plateau 3 est dégagé, si bien qu'on peut installer la pièce à usiner dans le réceptacle 4, de façon telle que l'avant-trou à usiner se trouve en position verticale, et en coïncidence avec l'orifice 14 ménagé dans la paroi de fond du réceptacle.

Le vérin 26 est ensuite en éloignement du coulisseau par rapport à la traverse 27,actionné de manière à faire descendre le coulisseau supérieur 12 le long des colonnes 15, jusqu'à atteindre la position dans laquelle l'extrémité avant 6 de la broche 1 se fixe en prise avec la tête de traction 11. Cette position est illustrée sur la figure 3.

Au cours de son déplacement, l'extrémité avant 6 de la broche 1 a pénétré à l'intérieur de l'avant-trou de la pièce à usiner, et elle en est ressortie à l'opposé, de sorte que la portion de centrage 8 a également pénétrée à l'intérieur de la pièce à usiner. L'extrémité avant 6, après avoir traversé l'orifice 14, a été fixée à l'intérieur de la tête de relevage 11. Au cours de cette opération de descente, le positionnement de la pièce à usiner a éventuellement été légèrement modifié par l'opérateur, de façon à s'assurer que la broche 1 descende de manière bien centrée à l'intérieur de l'avant-trou. La hauteur de la portion de centrage 8 est avantageusement choisie de manière à être supérieure à la hauteur de la pièce à usiner, si bien que le brochage en lui-même ne commence pas encore, et qu'il n'est nécessaire, au cours de cette phase que d'exercer une faible poussée sur le coulisseau supérieur afin de faire descendre la broche à l'intérieur de la pièce.

L'extrémité avant 6 de la broche 1 ayant été fixée dans la tête de traction 11, les brides de serrage 31 sont serrées autour des bagues 30 de manière à immobiliser le coulisseau supérieur 12 dans cette position le long des colonnes 15. Le coulisseau supérieur 12 et les colonnes 15 sont alors rendus solidaires en mouvement.

L'opération de brochage en elle-même débute alors. Les vérins 20 sont actionnés de façon à entraîner le coulisseau inférieur 10 en translation vers le bas. Le coulisseau 10 entraîne dans son mouvement les colonnes 15 qui entraînent elle-mêmes le coulisseau supérieur 12. La broche 1, fixée entre les têtes de traction 11 et de relevage 13 reliées respectivement aux deux coulisseaux, subit le même mouvement de translation vers le bas. Sa partie dentée 9 pénètre alors à l'intérieur de la pièce à usiner, et dans son parcours à travers l'avant-trou elle usine progressivement la surface de ce dernier, de manière à lui donner la forme souhaitée. Les efforts nécessaire pour réaliser l'usinage sont entièrement exercés au niveau du plateau support 3, de part et d'autre des colonnes 15.

Au cours de ce mouvement, la pièce exerce une résistance sur la broche. Cette résistance est transmise par l'intermédiaire des têtes de traction et de relevage aux coulisseaux et aux colonnes. Grâce d'une part à la rigidité du cadre formé par les colonnes avec les coulisseaux, et d'autre part à la présence et la hauteur des fûts de guidage des colonnes 17, il n'en résulte aucune déformation des colonnes ou déviation du trajet de la broche 1. Le brochage est de ce fait réalisé de façon très précise.

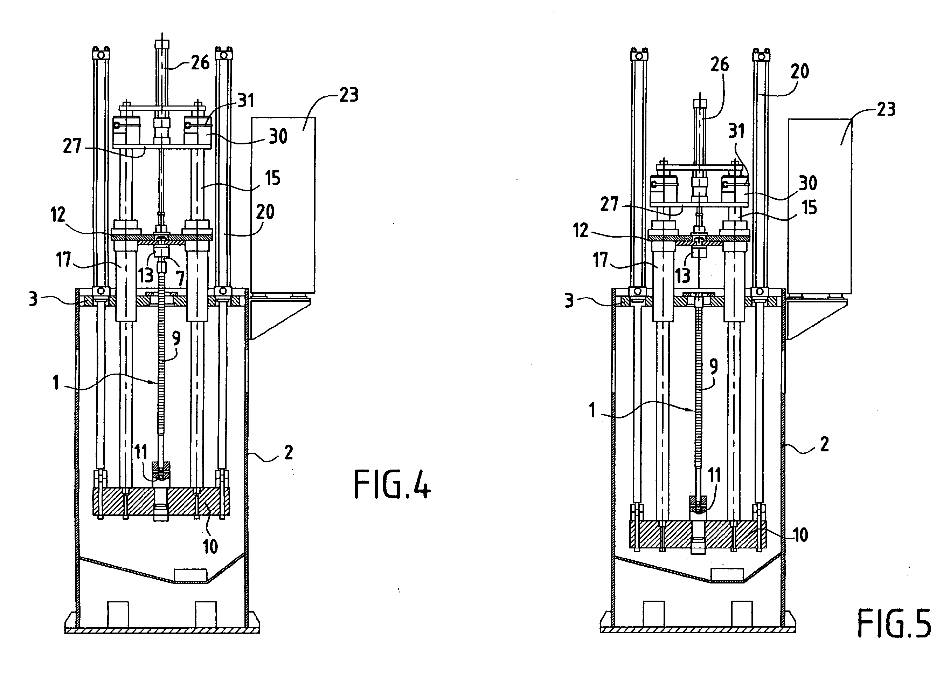

Lorsque l'intégralité de la partie dentée 9 de la broche 1 a traversé la pièce, l'usinage est terminé. Le dispositif selon l'invention se trouve alors dans la position illustrée sur la figure 4.

Dans cette position, le coulisseau supérieur 12 se trouve en position basse, c'est-à-dire qu'il est en butée contre les fûts de guidage 17. Le coulisseau inférieur 10 se trouve quant à lui enfoncé à l'intérieur du bâti 2, mais il n'est pas encore arrivé au bout de sa course. La broche 1 est toujours fixée entre la tête de traction 11 et la tête de relevage 13.

L'extrémité arrière 7 de la broche 1 est ensuite désolidarisée de la tête de relevage 13.

Les colonnes 15 poursuivent leur mouvement de translation vers le bas, alors que le coulisseau supérieur 12 reste en butée contre les fûts 17. Le piston du vérin 26 laisse remonter le coulisseau supérieur 12 le long des colonnes 15, jusqu'à sa position initiale sur ces dernières. La broche 1, dégagée de la tête de relevage 13, traverse entièrement la pièce à usiner, jusqu'à arriver dans la position représentée sur la figure 5.

Le coulisseau inférieur 10 est alors en bout de course, dans sa position basse, alors que le coulisseau supérieur 12 est resté bloqué contre les fûts 17 pendant que les colonnes 15 continuaient leur course vers le bas, entraînées par le coulisseau inférieur. La pièce qui a été usinée peut alors être commodément dégagée du plateau support 3. L'accès au réceptacle qui la supporte est en effet aisé par le dessus du plateau, cependant que la broche est escamotée par en-dessous.

Une fois la broche 1 détachée de la tête de traction 11, le dispositif peut être remis dans sa position initiale représentée sur la figure 2 par relevage des colonnes et des deux coulisseaux jusqu'à leurs positions hautes respectives au moyen des vérins 20 et 26, combiné à la saisie de l'extrémité supérieure 7 de la broche par la tête de relevage 13. Le dispositif est alors prêt pour l'usinage d'une nouvelle pièce.

La description qui précède explique clairement comment l'invention permet d'atteindre les objectifs qu'elle s'est fixés. En particulier, elle propose un dispositif de brochage des pièces qui présente une structure simple, qui est facile à utiliser, et qui offre une grande précision du brochage grâce à la stabilité et à la solidité du cadre rigide formé par le coulisseau inférieur et les colonnes et au système de vérins qui assure que tous les efforts d'usinage soient exercés au niveau du plateau.

Il ressort néanmoins de ce qui précède que l'invention n'est pas limitée aux modes de mise en oeuvre qui ont été spécifiquement décrits et représentés sur les figures, et qu'elle s'étend au contraire à toute variante passant par le biais de moyens équivalents.

## Revendications

1. Dispositif de brochage par entraînement d'une broche (1) à travers une pièce à usiner montée sur un plateau support (3), comportant, respectivement de part et d'autre dudit plateau (3), un premier coulisseau (10) agissant par une tête de traction (11) sur une extrémité inférieure (6) de ladite broche (1) et un second coulisseau (12) agissant par une tête de relevage (13) sur une extrémité supérieure opposée (7) de ladite broche (1), **caractérisé en ce que** lesdits coulisseaux (10, 12) sont reliés entre eux et guidés dans leurs déplacements par rapport audit plateau (3) exclusivement par des deux colonnes (15) montées mobiles en translation suivant leur axe à travers ledit plateau (3), formant une structure rigide avec ledit premier coulisseau (10) et le long desquelles ledit second coulisseau (12) est monté mobile.

2. Dispositif selon la revendication 1, **caractérisé en ce que** lesdites colonnes (15) sont guidées dans leur mouvement par rapport audit plateau (3) chacune par un fût (17) solidaire dudit plateau (3).

3. Dispositif selon la revendication 2, **caractérisé en ce que** chacun desdits fûts (17) présente une hauteur suffisante pour assurer le guidage du mouvement desdites colonnes (15) suivant leur axe sans qu'elles risquent de se déformer lors de l'entraînement de ladite broche (1) à travers ladite pièce à usiner.

4. Dispositif selon la revendication 2 ou 3, **caractérisé en ce que** les dimensions desdits fûts (17) de part et d'autre dudit plateau (3) sont telles que d'une part ledit premier coulisseau (10) peut venir suffisamment près dudit plateau (3) pour permettre l'accrochage de ladite broche (1) à ladite tête de traction (11) sensiblement au niveau dudit plateau (3), et d'autre part ledit second coulisseau (12) peut venir suffisamment près dudit plateau (3) pour permettre l'usinage complet de ladite pièce par ladite broche (1).

5. Dispositif selon l'une quelconque des revendications 1 à 4, **caractérisé en ce que** lesdites colonnes (15) sont reliées entre elles, à leurs extrémités du côté dudit plateau (3) opposé audit premier coulisseau (10), par une plaque de liaison rigide (32) disposée au-dessus dudit second coulisseau (12).

6. Dispositif selon l'une quelconque des revendications 1 à 5, **caractérisé en ce que** le mouvement dudit premier coulisseau (10) et desdites colonnes (15) est commandé par un système de vérins qui prennent appui de part et d'autre dudit plateau (3), d'une part sur ledit premier coulisseau (10) et d'autre part au niveau dudit plateau (3), sur un bâti fixe (2) portant ledit plateau (3).

7. Dispositif selon la revendication 6, **caractérisé en ce que** ledit système de vérins comporte deux vérins (20) qui sont disposés symétriquement de part et d'autre desdites colonnes (15).

8. Dispositif selon l'une quelconque des revendications 1 à 7, **caractérisé en ce que** le mouvement dudit second coulisseau (12) le long desdites colonnes (15) est commandé par un système de vérin comportant un vérin central (26) en ligne avec l'axe de ladite broche (1).

9. Dispositif selon les revendications 6 et 8, **caractérisé en ce que** ledit système de vérin commandant le mouvement dudit premier coulisseau (10) est plus puissant et ledit système de vérin commandant le mouvement dudit second coulisseau (12) est moins puissant, et **en ce que** ledit dispositif est associé à des moyens de commande synchronisée desdits systèmes de vérins et de la saisie et de la libération des extrémités de ladite broche (1) par ladite tête de traction (11) et par ladite tête de relevage (13).

10. Dispositif selon l'une quelconque des revendications 1 à 9, **caractérisé en ce qu'**il comporte des moyens de réglage de l'espacement entre ledit premier coulisseau (10) et ledit second coulisseau (12) en fonction de la hauteur de ladite broche (1).

11. Dispositif selon les revendications 8 et 10, **caractérisé en ce que** lesdits moyens de réglage sont constitués par une traverse rigide (27) se fixant en une position longitudinale variable sur lesdites colonnes (15), sur laquelle prend appui ledit vérin (26) commandant le mouvement dudit second coulisseau (12).
